Europäisches Patentamt

European Patent Office

Office européen des brevets

(11) Veröffentlichungsnummer: **0 525 539 A2**

## (12) EUROPÄISCHE PATENTANMELDUNG

(21) Anmeldenummer: **92112208.1**

(22) Anmeldetag: **17.07.92**

(51) Int. Cl.5: **A61C 1/00**, A61C 19/00

(30) Priorität: **31.07.91 DE 4125313**

(43) Veröffentlichungstag der Anmeldung:
**03.02.93 Patentblatt 93/05**

(84) Benannte Vertragsstaaten:
**AT BE CH DE ES FR GB GR IT LI NL PT**

(71) Anmelder: **RITTER GmbH DENTALEINRICHTUNGEN**
**Killisfeldstrasse 62**
**W-7500 Karlsruhe 41(DE)**

(72) Erfinder: **Rosenfeldt, Wolfgang**
**Beethovenstrasse 3**
**W-4748 Bad Bergzabern(DE)**

(74) Vertreter: **Dipl.-Ing. Heiner Lichti, Dipl.-Phys.**
**Dr. Jost Lempert, Dipl.-Ing. Hartmut Lasch**
**Postfach 41 07 60, Bergwaldstrasse 1**
**W-7500 Karlsruhe 41(DE)**

(54) **Verfahren zur Steuerung einer zahnärztlichen Behandlungseinrichtung und eine zahnärztliche Behandlungseinrichtung.**

(57) Es wird ein Verfahren zum Steuern einer zahnärztlichen Behandlungseinrichtung, wobei Steuersignale von einem Fußkontakt an eine zentrale Steuereinheit übertragen werden, sowie eine zahnärztliche Behandlungseinrichtung vorgeschlagen. Um die Störanfälligkeit zu verringern und eine besonders einfache Bedienung zu ermöglichen ist vorgesehen, daß eine Druckbelastung einer Oberfläche des Fußkontakts in primäre elektrische Signale umgewandelt wird, und daß die primären Signale in Steuersignale für die zentrale Steuereinheit umgesetzt werden.

EP 0 525 539 A2

Die Erfindung betrifft ein Verfahren zum Steuern einer zahnärztlichen Behandlungseinrichtung, wie einen Patientenstuhl und mehrere Dentalgeräte, wobei Steuersignale von einem Fußkontakt an eine zentrale Steuereinheit übertragen werden. Desweiteren betrifft die Erfindung eine zahnärztliche Behandlungseinrichtung mit einer zentralen Steuereinheit und einem Fußkontakt zur Steuerung.

Aus der WO 89/05613 ist eine derartige zahnärztliche Behandlungseinrichtung mit einer Vielzahl von Dentalgeräten bekannt. Es ist ein Fußkontakt mit einem beweglichen Steuerglied zur Aktivierung und Steuerung eines gewählten Instrumentes und zur Steuerung der Zusatzfunktionen in Verbindung mit dem Betrieb desselben mit Hilfe eines Mikroprozessors vorgesehen. Als nachteilig ist hierbei anzusehen, daß die Verwendung eines beweglichen Steuergliedes eine sehr feinfühlige Bedienung erfordert, und daß bewegliche Teile generell störanfällig sind.

Der Erfindung liegt die Aufgabe zugrunde, ein Verfahren und eine Einrichtung der oben genannten Art zu schaffen, so daß eine einfachere Bedienung, eine größere Funktionsvielfalt und eine geringere Störanfälligkeit ermöglicht wird.

Die Aufgabe wird für ein Verfahren dadurch gelöst, daß eine Druckbelastung einer Oberfläche des Fußkontakts in primäre elektrische Signale umgewandelt wird, und daß die primären Signale in Steuersignale für die zentrale Steuereinheit umgesetzt werden. Für eine zahnärztliche Behandlungseinrichtung ist erfindungsgemäß vorgesehen, daß der Fußkontakt wenigstens einen Drucksensor zur Detektion einer Druckbelastung einer Oberfläche des Fußkontaktes und eine Signalauswerteelektronik aufweist.

Hierdurch wird die Störanfälligkeit drastisch reduziert, da ein bewegliches Schaltglied nicht mehr notwendig ist. Eine drucksensitive Fläche ist wesentlich einfacher mit dem Fuß zu bedienen als ein bewegliches Schaltteil. In einfacher Weise lassen sich damit eine Vielzahl von Funktionen steuern, wobei die Flächen alle in einer Ebene angeordnet sein können, was mit den herkömmlichen Schaltgliedern nicht ohne weiteres möglich ist. Die erfindungsgemäße Lösung gestattet eine extrem niedrige Bauhöhe des Fußkontakts. Weiterhin besteht die Möglichkeit, den Fußkontakt mit einer geschlossenen Oberfläche zu versehen. Dies ist unter hygienischen Gesichtspunkten vorteilhaft.

Um mehrere Funktionen einzeln steuern zu können, werden Druckbelastungen in verschiedenen Bereichen der Oberfläche getrennt ausgewertet.

Es ist vorgesehen, daß Druckbelastungen über - Drucksensoren für einfache Schaltfunktionen, - Potentiometersensoren zur analogen Regelung, - XYZ-Sensorpads zur frei programmierbaren Schaltung und Regelung an beliebigen Plätzen oder eine Kombination dieser Möglichkeiten in primäre Signale umgesetzt werden. So wird eine individuelle Auslegung des Fußkontakts je nach Verwendung ermöglicht. Insbesondere durch Sensorpads, mit denen die Stärke und der Ort einer Druckbelastung in einem zweidimensionalen Bereich bestimmt werden können, wird eine universelle Verwendbarkeit des Fußkontakts möglich. Dies wird weiter dadurch unterstützt, daß durch Programmierung Funktionsfelder für Druckbelastungen durch einen Fuß oder Teile desselben beliebig definiert werden.

Wenn die Stärke der Druckbelastung ausgewertet wird, kann damit eine stufenlose Funktion, beispielsweise die Geschwindigkeit eines Bohrers oder dergleichen, direkt gesteuert werden.

Es ist vorgesehen, daß erst oberhalb eines Schwellwertes ein Steuersignal erzeugt wird. Dies schließt eine ungewollte Betätigung aus.

In einer bevorzugten Ausführung ist vorgesehen, daß Steuersignale in funktioneller Abhängigkeit von der Druckbelastung erzeugt werden. Durch eine entsprechende Auswahl der funktionellen Abhängigkeit lassen sich damit beispielsweise Tipp-Schalter simulieren, die jeweils bei erneuter Druckbelastung ihren Schaltzustand ändern, oder auch eine exponentielle Abhängigkeit von der Durckbelastung realisieren.

In einer Ausführung werden die Differenz, das Verhältnis oder deren Änderungen von einer Druckbelastung in einem Bereich des Fußkontakts zu einer Druckbelastung in einem anderen Bereich ausgewertet. Dies ist für stufenlose Steuerungen besonders günstig.

So zeichnet sich eine bevorzugte Ausführung dadurch aus, daß im Bereich der Zehen oder des Fußballens und im Bereich der Ferse eines aufliegenden Fußes Druckbelastungen gemessen werden. Durch eine Auswertung der Differenz oder des Verhältnisses der Druckbelastungen in den beiden Bereichen wird eine Art Schaltwippe simuliert, so daß ein Be- und Entlasten der Zehen, also eine Gewichtsverlagerung nach vorn oder nach hinten bzw. eine Be- und Entlastung der Ferse registriert wird. Diese Art der Belastung kann ein Mensch sehr leicht und feinfühlig verändern, so daß die beschriebene Ausbildung insbesondere für empfindliche Steuerungsaufgaben geeignet ist. Da nur eine Auswertung der Differenz oder des Verhältnisses der beiden Druckbelastungen erfolgt, sind die Steuersignale unabhängig vom Absolutgewicht der Bedienperson und es ist eine Bedienung aus dem Sitzen wie aus dem Stehen möglich.

Darüber hinausgehend kann alternativ oder zusätzlich vorgesehen sein, daß Druckbelastungen in der rechten und linken Längshälfte eines aufliegenden Fußes verglichen werden. Hierbei wird bei einer der vorangehenden Ausführung entsprechenden Auswertung ein Verdrehen des Fußes um seine Längsachse registriert und zur Steuerung verwendet.

Eine universelle Einsetzbarkeit ergibt sich auch dadurch, daß die Auswertefunktionen und/oder Schwellwerte eingegeben werden. So ist beispielsweise vorgesehen, daß das Gewicht der Bedienperson eingebbar ist und automatisch eine Anpassung der Schwellwerte erfolgt, oder daß einzelnen Sensoren verschiedene Funktionen in Abhängigkeit von entnommenen Instrumenten zugeordnet werden (verschiedene Funktionsebenen).

Eine Ausführung zeichnet sich dadurch aus, daß die primären Signale im Fußkontakt in Steuersignale umgesetzt werden. Diese werden dann an die zentrale Steuereinheit weitergeleitet. Diese Ausbildung ist insbesondere zum Austausch von herkömmlichen Fußkontakten geeignet, da eine entsprechende Nachbildung der Schaltfunktionen hier in der Auswerteelektronik des neuen Fußkontakts erfolgt.

Bevorzugt ist vorgesehen, daß die primären Signale in sekundäre Signale durch Verstärken, Digitalisieren, Normieren und/oder Anwendung von Auswertefunktionen gewandelt werden. Dabei werden im Fußkontakt nur die für eine störungsfreie Weiterleitung der Signale notwendigen Wandlungen vorgenommen. Die gewandelten sekundären Signale werden dann vom Fußkontakt zur Zentraleinheit weitergeleitet. Dies ermöglicht ein geringes Bauvolumen des Fußkontakts.

Die Zuordnung der Drucksensoren zu einzelnen Funktionen erfolgt dann dadurch, daß die sekundären Signale an einen Controller zur Umsetzung in Steuersignale übertragen werden. Bevorzugt ist diese Zuordnung programmierbar, so daß der Fußkontakt universell für die verschiedensten Geräte und Behandlungseinrichtungen einsetzbar ist.

Eine Ausführung zeichnet sich dadurch aus, daß die primären oder sekundären Signale kabellos an die Steuereinheit bzw. den Controller übertragen werden. Bevorzugt ist dann auch vorgesehen, daß der Fußkontakt kabellos mit Energie versorgt wird. Hierdurch wird erreicht, daß keine Kabel am Boden vorhanden sind, die sonst eine erhebliche Stolpergefahr darstellen würden.

Vorzugsweise weist der Fußkontakt einen Potentiometersensor auf. Durch eine Druckbelastung des Sensors an einer bestimmten Stelle wird eine entsprechende Spannung detektiert, so daß damit sehr leicht stufenlose Steuerungen zu realisieren sind.

Indem der Fußkontakt eine Auflagefläche für den ganzen Fuß bildet und im Bereich der Zehen bzw. des Fußballens und im Bereich der Ferse Drucksensoren vorgesehen sind, kann in einfacher Weise eine Schaltwippe simuliert werden.

Eine bevorzugte Ausführung ergibt sich dadurch, daß Erhebungen oder Vertiefungen auf dem Fußkontakt als Orientierungshilfe für einen Fuß zur Betätigung ohne Blickkontakt vorgesehen sind.

Um eine genaue Positionierung und sichere Bedienung sicherzustellen, ist auch vorgesehen, daß der Fußkontakt Anschläge, Oberflächenstrukturen und/oder -formen zur Orientierung des Fußes aufweist.

Eine Ausführung zeichnet sich dadurch aus, daß die Anschläge, Strukturen und Formen so ausgebildet sind, daß ein seitliches Verschieben der Fußspitze bei festgelegter Fersenpartie möglich ist. Dies ist insbesondere vorteilhaft bei einem Zusammenwirken mit dem Potentiometersensor, der dann von der Fußspitze bedient wird.

Um eine universelle Einsetzbarkeit des Fußkontaktes für verschiedene Behandlungseinrichtungen und eine optimale Anpassung an die jeweilige Bedienperson zu ermöglichen, sind die Anschläge als aufsetzbare Masken ausgebildet. Dies ist insbesondere in Verbindung mit Sensorfeldern, denen individuell beliebige Funktionen in bestimmten Flächenbereichen zugeordnet werden können, interessant, um eine daran angepaßte Bedienung zu ermöglichen.

Eine Ausführungsform zeichnet sich dadurch aus, daß der Fußkontakt auf seiner Unterseite Rollen aufweist. Hierdurch ist es für die Bedienperson ein leichtes, den Fußkontakt an jede für sie günstige Position zu bewegen.

Wenn darüber hinaus die Rollen gegen Federkraft versenkbar sind, wird bei Belastung des Fußkontakts ein Wegrollen verhindert und ein sicheres Bedienen gewährleistet.

In einer Ausführungsvariante ist vorgesehen, daß der Fußkontakt selbstfahrend ist. So kann der Fußkontakt beispielsweise zu Beginn einer Behandlung eine vorbestimmte, von der Bedienperson günstig zu erreichende Position einnehmen. In Verbindung mit einer Fahrsteuerung und einem IR-Sensor oder einer sonstigen Erkennungseinrichtung zu seiner Positionierung im Bereich einer Bedienperson kann der Fußkontakt selbstständig eine für die Bedienperson günstig zu erreichende Position einnehmen. Zur Erkennung kann beispielsweise ein in der Schuhsohle der Bedienperson detektierbares Material vorgesehen sein.

Eine alternative Möglichkeit ist dadurch gegeben, daß der Fußkontakt im Boden integriert ist. Dabei kann durch die erfindungsgemäße Ausgestaltung eine völlig plane Bodenoberfläche realisiert werden, die entsprechend leicht zu reinigen ist, und Stolpergefahren völlig ausschließt.

In einer weiteren Alternative ist vorgesehen, daß der Fußkontakt als Überschuh ausgebildet ist. Dies Ausführung ist insbesondere in Verbindung mit einer kabellosen Übertragung der Signale und einer kabellosen Energieversorgung vorteilhaft, da die Bedienperson dann völlige Bewegungsfreiheit hat und trotzdem ständig eine Steuerung der Behandlungseinrichtung möglich ist.

Wenn in den Fußkontakt wiederaufladbare Batterien zur Energieversorgung integriert sind, ist lediglich zeitweise, z.B. nachts, Energiezufuhr zum Wiederaufladen notwendig. Dies kann beispielsweise durch ein Parken des Fußkontakts in einer Ausnehmung mit entsprechenden Kontakten erfolgen. Somit entfällt eine Kabelverbindung zwischen Behandlungseinrichtung und Fußkontakt zur Energieversorgung.

Alternativ oder auch in Verbindung mit der vorgenannten Ausbildung kann vorgesehen sein, daß Induktionsleitungen im Boden zur Energieversorgung des Fußkontaktes vorgesehen sind. Hierdurch ergeben sich die gleichen Vorteile.

Die Signale der Signalauswerteelektronik werden per Kabel, Funk, Infrarot-, Ultraschallwellen oder über Induktionsschleifen an die zentrale Steuereinheit übertragen. Hervorzuheben ist, daß eine kabellose Signalübertragung insbesondere in Verbindung mit einer kabellosen Energieversorgung vorteilhaft ist, da dann keine Kabelverbindungen zwischen Behandlungseinrichtung und Fußkontakt notwendig sind.

Es ist vorgesehen, daß der Steuereinheit ein Controller zur Umwandlung der Signale des Fußkontaktes in Steuersignale zugeordnet ist. Insbesondere ist dabei vorgesehen, daß der Controller zur Funktionszuweisung und Auswertung der Sensorsignale des Fußkontaktes programmierbar ist. Diese Ausgestaltung gestattet eine universelle Einsetzbarkeit des Fußkontaktes zur Steuerung jeder beliebigen Gerätekombination. Insbesondere wird eine Anpassung an neue Instrumente stark vereinfacht, da durch entsprechendes Umprogrammieren leicht dafür erforderliche Steuerfunktionen nachgebildet werden können.

Im folgenden wird die Erfindung anhand der Zeichnung eines Ausführungsbeispiels näher beschrieben. Es zeigen:

Figur 1      eine Prinzipskizze; und

Figur 2      eine Draufsicht auf ein Ausführungsbeispiel eines Fußkontaktes.

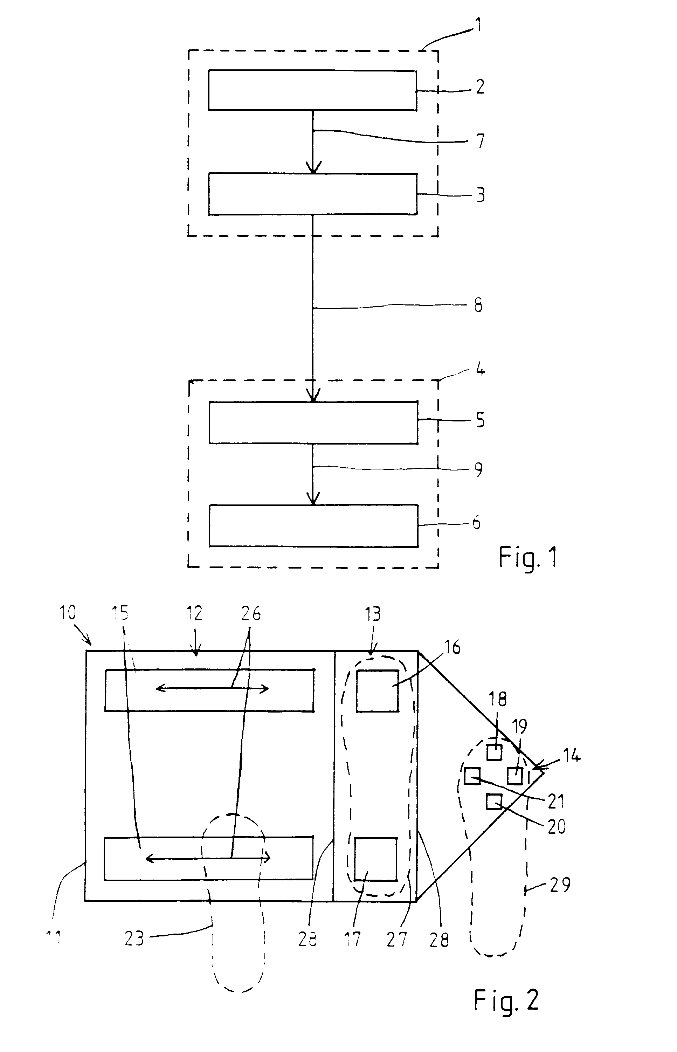

Figur 1 zeigt einen Fußkontakt 1 (gestrichelt dargestellt) mit einem Drucksensor 2 und einer Auswerteelektronik 3. Der Fußkontakt 1 ist an eine Zentraleinheit 4 angeschlossen, die beispielsweise im Fuß eines Patientenstuhles oder in einem Instrumententräger angeordnet sein kann. Die Zentraleinheit weist einen Controller 5 und eine zentrale Steuereinheit 6 auf.

Der Fußkontakt 1 detektiert Druckbelastungen durch den Drucksensor 2. Dieser ist beispielsweise mit einem Piezokristall oder einer leitfähigen Paste versehen, wobei er seine elektrischen Eigenschaften unter Druckbelastung ändert. Hierdurch werden primäre elektrische Signale 7 bereitgestellt, die an die Auswerteelektronik 3 übertragen werden. Die primären Signale 7 werden in der Auswerteelektronik 3 durch Verstärkung und Digitalisierung in sekundäre Signale 8 umgesetzt.

Die sekundären Signale 8 werden vom Fußkontakt 1 an die Zentraleinheit 4 übertragen und dort an den Controller 5 geleitet. Die Übertragung kann dabei über Kabel oder auch mit Hilfe von Sendern und Empfängern über Funk, Infrarot oder Ultraschall erfolgen.

Im Controller 5 wird in Abhängigkeit von der Druckbelastung des Drucksensors 2 ein Steuersignal 9 gebildet. Dies kann nach verschiedenen Kriterien, wie Stärke der Druckbelastung, Dauer der Belastung und einer beliebigen funktionellen Abhängigkeit, erfolgen. Hierzu ist der Controller 5 entsprechend programmierbar. In Figur 1 ist nur ein Drucksensor 2 dargestellt. Selbstverständlich können die Auswerteelektronik 3 und der Controller 5 auch die Signale von einer Vielzahl von Drucksensoren 2 über sekundäre Signale 8 in Steuersignale 9 umsetzen. Darüber hinaus können Belastungen und deren Positionen (XYZ-Sensorpads) gespeichert werden und Schalt-/Regelfunktionen beliebig zugeordnet und programmiert werden. Beispielhaft wird dies anhand der folgenden Tabelle verdeutlicht:

| Bauelement | Richtung | Betätigung / Stellung | |
|---|---|---|---|
| Drucksensor | Z - Achse | Druck | (z.B. speichern) |
| Potentiometersensor | X -Achse Z - Achse | Position Druck | (z.B. regeln, speichern) |
| Sensorpad | X-X - Achse Z- Achse | Position Druck | (z.B. regeln, schalten, speichern) |

Der Controller 9 kann eine beliebige Schnittstelle aufweisen, so daß die Steuersignale auch von anderen Einrichtungen benutzt werden können.

Die zentrale Steuereinheit 6 übernimmt vom Controller 5 die Steuersignale 9 und steuert entsprechend die verschiedenen Dentalgeräte, wie Behandlungsinstrumente, Absauger oder auch den Patientenstuhl.

Die Energieversorgung des Fußkontaktes 1 erfolgt in an sich bekannter Weise über Kabel oder mit Hilfe eines Akkus. Alternativ kann jedoch auch eine Energieübertragung mit Hilfe von Induktionsschleifen vorgesehen sein. In Figur 1 ist die Energieversorgung nicht dargestellt.

Figur 2 zeigt einen Fußkontakt 10 in der Draufsicht. Dieser weist ein Gehäuse 11 auf. In der Oberseite des Gehäuses 11 sind drei Sensorgruppen 12, 13 und 14 integriert.

Die Sensorgruppe 12 wird durch zwei Potentiometersensoren 15 gebildet. Ein Sensor 15 ist aus einem Widerstandsstreifen mit kammartigen Zähnen aufgebaut. Zwischen diesen Zähnen greifen Zähne eines Abgriffkontaktes ein. Bei Druckbelastung werden über eine leitfähige Deckschicht einige wenige nebeneinanderliegende Zähne kurzgeschlossen. Bei einer an der Widerstandsbahn anliegenden Spannung wird dann über den Abgriff eine zum Ort der Druckbelastung korrespondierende Spannung abgenommen.

Die Sensorgruppe 13 wird durch zwei Drucksensoren 16 und 17 gebildet. Diese können beispielsweise als Druckschalter mit den Zuständen Ein und Aus oder aber auch als Drucksensoren zur Detektion der Stärke von Druckbelastungen ausgebildet sein.

Die Sensorgruppe 14 ist aus vier vergleichbaren Sensoren 18 bis 21 aufgebaut.

Die Spitze des Fußes 23 kann auf einem der Potentiometersensoren 15 gemäß Pfeil 26 nach beiden Seiten zur stufenlosen Steuerung in Abhängigkeit von der Lage des Fußes 23 bewegt werden. Dadurch wird eine Bedienung des Fußkontakts 10 von zwei gegenüberliegenden Seiten ermöglicht.

Zur besseren Trennung der Sensorgruppen 12, 13 und 14 ist die Sensorgruppe 13 etwas erhöht gegenüber den anderen angeordnet. Um einem aufliegenden Fuß 27 darüber hinaus einen sicheren Halt zu geben, weist die Sensorgruppe 13 einen erhöhten seitlichen Rand 28 auf. Im Ausführungsbeispiel wird der Sensor 16 durch die Spitze des Fußes 27 und der Sensor 17 durch den Fersenbereich des Fußes 27 betätigt. Die Sensoren 16 und 17 sind als Druckschalter ausgebildet, die jeweils eine getrennte Funktion der Behandlungseinrichtung steuern. Alternativ können diese aber auch als Drucksensoren, die die Stärke der Druckbelastung detektieren, ausgebildet sein und zusammen eine Funktion steuern. Es wird dann die Differenz oder das Verhältnis der Druckbelastung beider Sensoren 16 und 17 gebildet und zur Steuerung beispielsweise eines Schrittmotors oder einer stufenlos einstellbaren Größe verwendet.

Bei der Sensorgruppe 14 wirken jeweils die Sensoren 18 und 20 sowie die Sensoren 19 und 21 paarweise zusammen, wobei die Differenz der Druckbelastung bei zwei zusammengehörenden Sensoren ausgewertet wird. Die Sensoren 18 bis 21 sind so angeordnet, daß sie von einer Spitze eines gestrichelt dargestellten Fußes 29 allesamt überdeckt werden können. Mit dieser Anordnung ist es nun möglich, gleichzeitig zwei Funktionen zu steuern. Ein verdrehen des Fußes um die Längsachse bewirkt ein Ansprechen des Sensorenpaares 19, 21 und eine Be- bzw. Entlastung der Zehen bewirkt ein Ansprechen des Sensorenpaares 18, 20. Da jeweils nur die Differenz der zusammengehörenden Sensoren 18, 20 und 19, 21 ausgewertet wird, können zwei Funktionen unabhängig voneinander gesteuert werden.

Frei definierbare Funktionsbereiche können durch XYZ-Sensorpads (Sensorfelder) realisiert werden, Druck in Z-Richtung für einfache Schaltfunktionen und Betätigung in XY-Richtung zur Positionsauswertung (z.B. für Regelfunktion).

Der Fußkontakt 10 kann auch je nach Größe und Auslegung von mehreren Personen gleichzeitig oder wahlweise, wie einem Zahnarzt und seiner Helferin, bedient werden. In diesem Fall ist eine Anordnung des Fußkontakts 10 unter dem Patientenstuhl sinnvoll, um für jeden günstig erreichbar zu sein.

**Patentansprüche**

1. Verfahren zum Steuern einer zahnärztlichen Behandlungseinrichtung, wie einen Patientenstuhl und mehrere Dentalgeräte, wobei Steuersignale von einem Fußkontakt an eine zentrale Steuereinheit übertragen werden, dadurch gekennzeichnet, daß eine Druckbelastung einer Oberfläche des Fußkontakts in primäre elektrische Signale umgewandelt wird, und daß die primären Signale in Steuersignale für die zentrale Steuereinheit umgesetzt werden.

2. Verfahren nach Anspruch 1, dadurch gekennzeichnet, daß Druckbelastungen über - Drucksensoren für einfache Schaltfunktionen, - Potentiometersensoren zur analogen Regelung, -XYZ-Sensorpads zur frei programmierbaren Schaltung und Regelung an beliebigen Plätzen oder eine Kombination dieser Möglichkeiten in primäre Signale umgesetzt werden.

3. Verfahren nach Anspruch 1 oder 2, dadurch gekennzeichnet, daß die Stärke der Druckbelastung ausgewertet wird.

4. Verfahren nach Anspruch 3, dadurch gekennzeichnet, daß erst oberhalb eines Schwellwertes ein Steuersignal erzeugt wird.

**5.** Verfahren nach Anspruch 3 oder 4, dadurch gekennzeichnet, daß Steuersignale in funktioneller Abhängigkeit von der Druckbelastung erzeugt werden.

**6.** Verfahren nach einem der vorangehenden Ansprüche, dadurch gekennzeichnet, daß durch Programmierung Funktionsfelder für Druckbelastungen durch einen Fuß oder Teile desselben beliebig definiert werden.

**7.** Verfahren nach einem der vorangehenden Ansprüche, dadurch gekennzeichnet, daß die Auswertefunktionen und/oder Schwellwerte eingegeben werden.

**8.** Verfahren nach einem der vorangehenden Ansprüche, dadurch gekennzeichnet, daß die primären Signale im Fußkontakt in Steuersignale umgesetzt werden.

**9.** Verfahren nach einem der vorangehenden Ansprüche, dadurch gekennzeichnet, daß die primären Signale in sekundäre Signale durch Verstärken, Digitalisieren, Normieren und/oder Anwendung von Auswertefunktionen gewandelt werden.

**10.** Verfahren nach einem der vorangehenden Ansprüche, dadurch gekennzeichnet, daß die sekundären Signale an einen Controller zur Umsetzung in Steuersignale übertragen werden.

**11.** Verfahren nach einem der vorangehenden Ansprüche, dadurch gekennzeichnet, daß die primären oder sekundären Signale kabellos an die Steuereinheit bzw. den Controller übertragen werden.

**12.** Verfahren nach einem der vorangehenden Ansprüche, dadurch gekennzeichnet, daß der Fußkontakt kabellos mit Energie versorgt wird.

**13.** Zahnärztliche Behandlungseinrichtung, wie ein Patientenstuhl und mehrere Dentalgeräte, mit einer zentralen Steuereinheit und einem Fußkontakt zur Steuerung, insbesondere zur Durchführung eines Verfahrens nach einem der vorgenannten Ansprüche, dadurch gekennzeichnet, daß der Fußkontakt (1; 10) wenigstens einen Drucksensor (2; 15-21) zur Detektion einer Druckbelastung einer Oberfläche des Fußkontaktes (1; 10) und eine Signalauswerteelektronik (3) aufweist.

**14.** Einrichtung nach Anspruch 13, dadurch gekennzeichnet, daß der Fußkontakt (1; 10) wenigstens ein Sensorfeld (Sensorpad) aufweist.

**15.** Einrichtung nach Anspruch 13 oder 14, dadurch gekennzeichnet, daß der Fußkontakt (10) einen Potentiometersensor (15) aufweist.

**16.** Einrichtung nach einem der Ansprüche 13 bis 15, dadurch gekennzeichnet, daß Erhebungen oder Vertiefungen auf dem Fußkontakt als Orientierungshilfe für einen Fuß zur Betätigung ohne Blickkontakt vorgesehen sind.

**17.** Einrichtung nach einem der Ansprüche 13 bis 16, dadurch gekennzeichnet, daß in den Fußkontakt (10) wiederaufladbare Batterien zur Energieversorgung integriert sind.

**18.** Einrichtung nach einem der Ansprüche 13 bis 17, dadurch gekennzeichnet, daß die Signale (8) der Signalauswerteelektronik (3) per Kabel, Funk, IR oder Ultraschallwellen an die zentrale Steuereinheit (6) übertragbar sind.

**19.** Einrichtung nach einem der Ansprüche 13 bis 18, dadurch gekennzeichnet, daß der Steuereinheit (6) ein Controller (5) zur Umwandlung der Signale des Fußkontaktes (1) in Steuersignale (9) zugeordnet ist.

**20.** Einrichtung nach Anspruch 19, dadurch gekennzeichnet, daß der Controller (5) zur Funktionszuweisung und Auswertung der Signale (7, 8) des Fußkontakts (1) programmierbar ist.

Fig. 1

Fig. 2